# EUROPEAN PATENT APPLICATION

(11) **EP 4 596 291 A1**
(43) Date of publication of application: **06.08.2025**
(21) Application number: 24206737.9
(22) Date of filing: 15.10.2024
(51) Int. Cl.: B60K 35/22, B60K 35/28, B60K 31/00

(54) **IN-VEHICLE DISPLAY SYSTEM AND CONTROL METHOD OF IN-VEHICLE DISPLAY SYSTEM**

(30) Priority: 30.01.2024 JP 2024011664
(71) Applicant: TOYOTA JIDOSHA KABUSHIKI KAISHA, Aichi-ken, 471-8571 (JP)
(72) Inventor: ITO, Hironori, Tokyo, 103-0022 (JP)
(74) Representative: D Young & Co LLP

(57) **Abstract**

An in-vehicle display system mounted on a host vehicle, which displays the surroundings of the host vehicle on a display in the vehicle cabin. The in-vehicle display system includes a target inter-vehicle distance acquisition unit configured to acquire a target inter-vehicle distance for speed control of the host vehicle relative to a preceding vehicle traveling ahead of the host vehicle, and a display control unit configured to display a host vehicle icon and a preceding vehicle icon on a traveling lane area displayed on the display when the preceding vehicle is detected.

## Description

### CROSS-REFERENCE TO RELATED APPLICATIONS

This application is based upon and claims the benefit of priority from Japanese Patent Application No. 2024-011664, filed on January 30, 2024, the entire contents of which are incorporated herein by reference.

### TECHNICAL FIELD

The present disclosure relates to an in-vehicle display system and a control method of the in-vehicle display system.

### BACKGROUND

Conventionally, Japanese Unexamined Patent Application Publication No. 2023-117717 is known as a technical literature relating to an in-vehicle display system. This publication discloses a vehicle control device that indicates the status of recognizing other vehicles by displaying a preceding vehicle icon at a fixed position on a display in the vehicle cabin.

### SUMMARY

However, in devices like the one described above, the display area of the display is limited, and it is known that the preceding vehicle icon is displayed at a fixed position on the display. Meanwhile, when controlling the host vehicle's speed and other controls based on the inter-vehicle distance to the preceding vehicle, a target inter-vehicle distance is set as the control target. For this target inter-vehicle distance, an intuitive and easily understandable display using the preceding vehicle icon on the display is required instead of numerical values.

An aspect of the present disclosure is an in-vehicle display system mounted on a host vehicle and configured to display a situation around the host vehicle on a display inside a vehicle cabin. The in-vehicle display system includes a target inter-vehicle distance acquisition unit configured to acquire a target inter-vehicle distance for speed control of the host vehicle relative to a preceding vehicle traveling ahead of the host vehicle, and a display control unit configured to display a host vehicle icon and a preceding vehicle icon on a traveling lane area displayed on the display when the preceding vehicle is detected. The traveling lane area is set with at least a first preceding vehicle display position in front of the host vehicle icon and a second preceding vehicle display position between the first preceding vehicle display position and the host vehicle icon. The display control unit displays the preceding vehicle icon at the first preceding vehicle display position on the display when the target inter-vehicle distance is a first set distance. The display control unit displays the preceding vehicle icon at the second preceding vehicle display position on the display when the target inter-vehicle distance is a second set distance smaller than the first set distance. The display control unit moves the preceding vehicle icon on the display from the first preceding vehicle display position to the second preceding vehicle display position as the inter-vehicle distance between the preceding vehicle and the host vehicle approaches the second set distance from the first set distance when the target inter-vehicle distance is changed from the first set distance to the second set distance.

According to the in-vehicle display system of an aspect of the present disclosure, the preceding vehicle icon is displayed at a predetermined position according to the target inter-vehicle distance. Furthermore, when the target inter-vehicle distance is changed, the preceding vehicle icon is moved to match the actual change in the inter-vehicle distance. This allows the user to appropriately be informed of the situation between the host vehicle and the preceding vehicle according to the target inter-vehicle distance.

In the in-vehicle display system of an aspect of the present disclosure, the display control unit may display the preceding vehicle icon at a position closer to the host vehicle icon than the second preceding vehicle display position in the traveling lane area when the inter-vehicle distance between the preceding vehicle and the host vehicle becomes less than a proximity determination threshold regardless of the target inter-vehicle distance. The display control unit may move the preceding vehicle icon closer to the host vehicle icon as the inter-vehicle distance between the preceding vehicle and the host vehicle decreases.

In the in-vehicle display system of an aspect of the present disclosure, the display control unit may move the preceding vehicle icon to the second preceding vehicle display position at the timing when the inter-vehicle distance between the preceding vehicle and the host vehicle reaches the second set distance when the target inter-vehicle distance is changed from the first set distance to the second set distance.

Another aspect of the present disclosure is a control method of an in-vehicle display system mounted on a host vehicle, which displays the surroundings of the host vehicle on a display in the vehicle cabin. The control method of the in-vehicle display system includes acquiring a target inter-vehicle distance for speed control of the host vehicle relative to a preceding vehicle traveling ahead of the host vehicle. The control method of the in-vehicle display system includes displaying a host vehicle icon and a preceding vehicle icon on a traveling lane area displayed on the display when the preceding vehicle is detected. The traveling lane area is set with at least a first preceding vehicle display position in front of the host vehicle icon and a second preceding vehicle display position between the first preceding vehicle display position and the host vehicle icon. The control method of the in-vehicle display system includes displaying the preceding vehicle icon at the first preceding vehicle display position on the display when the target inter-vehicle distance is the first set distance. The control method of the in-vehicle display system includes displaying the preceding vehicle icon at the second preceding vehicle display position on the display when the target inter-vehicle distance is the second set distance smaller than the first set distance. The control method of the in-vehicle display system includes moving the preceding vehicle icon on the display from the first preceding vehicle display position to the second preceding vehicle display position as the inter-vehicle distance between the preceding vehicle and the host vehicle approaches the second set distance from the first set distance when the target inter-vehicle distance is changed from the first set distance to the second set distance.

According to the control method of the in-vehicle display system of another aspect of the present disclosure, the preceding vehicle icon is displayed at a predetermined position according to the target inter-vehicle distance. Furthermore, in the control method of the in-vehicle display system, when the target inter-vehicle distance is changed, the preceding vehicle icon is moved to match the actual change in the inter-vehicle distance. This allows the user to appropriately be informed of the situation between the host vehicle and the preceding vehicle according to the target inter-vehicle distance.

According to each aspect of the present disclosure, the user can appropriately be informed of the situation between the host vehicle and the preceding vehicle according to the target inter-vehicle distance.

### BRIEF DESCRIPTION OF THE DRAWINGS

FIG. 1 is a block diagram illustrating an in-vehicle display system according to an embodiment.
FIG. 2 is a diagram illustrating an example of a display screen.
FIG. 3A is a plan view illustrating an example of the actual situation between the host vehicle and the preceding vehicle.
FIG. 3B is a diagram for explaining a display example corresponding to FIG. 3A.
FIG. 4A is a plan view illustrating an example of a situation where the target inter-vehicle distance is switched to the second set distance.
FIG. 4B is a diagram for explaining a display example corresponding to FIG. 4A.
FIG. 5A is a plan view illustrating an example of a situation where the actual inter-vehicle distance becomes less than the proximity determination threshold.
FIG. 5B is a diagram for explaining a display example corresponding to FIG. 5A.
FIG. 6A is a flowchart illustrating an example of a preceding vehicle icon display process.
FIG. 6B is a flowchart illustrating an example of a preceding vehicle icon display position change process.
FIG. 7A is a flowchart illustrating an example of a proximity determination process.
FIG. 7B is a flowchart illustrating another example of a preceding vehicle icon display position change process.

### DETAILED DESCRIPTION

Hereinafter, embodiments of the present disclosure will be described with reference to the drawings.

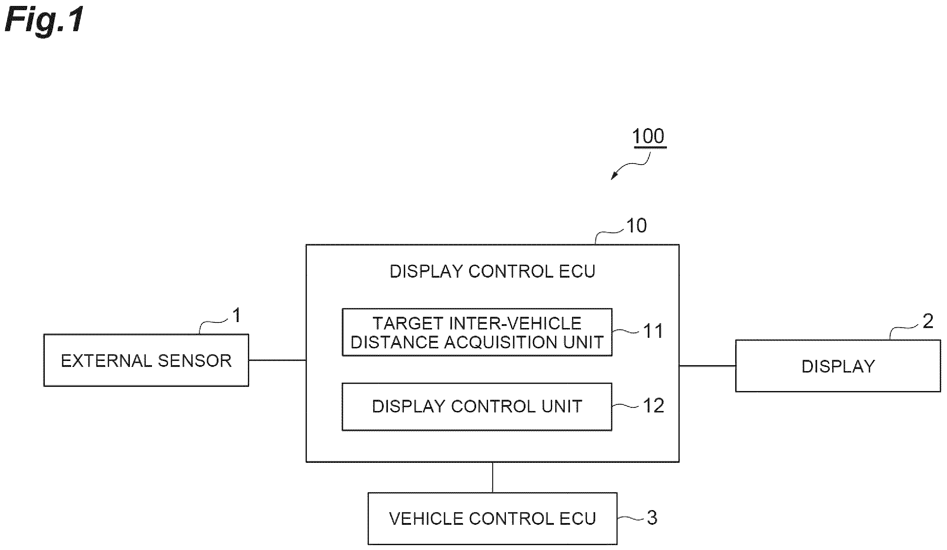

FIG. 1 is a block diagram illustrating an in-vehicle display system 100 according to an embodiment. The in-vehicle display system 100 illustrated in FIG. 1 is mounted on a vehicle such as a passenger car or a truck (hereinafter referred to as the host vehicle) and is a device that performs image display according to the surrounding situation of the vehicle.

The host vehicle has a function of controlling the speed of the host vehicle so that the inter-vehicle distance between the host vehicle and the preceding vehicle traveling ahead of the host vehicle in the traveling lane of the host vehicle becomes the target inter-vehicle distance. The host vehicle may have a driving support function such as adaptive cruise control (ACC) and may have an autonomous driving function including speed control. The target inter-vehicle distance is a set value that serves as a reference for speed control of the host vehicle relative to the preceding vehicle traveling ahead of the host vehicle.

### Configuration of In-Vehicle Display System

Hereinafter, the configuration of the in-vehicle display system 100 according to the present embodiment will be described with reference to the drawings. As illustrated in FIG. 1, the in-vehicle display system 100 includes a display control ECU [Electronic Control Unit] 10 that performs overall management of the device. The display control ECU 10 is an electronic control unit having a CPU [Central Processing Unit] and a storage unit. The storage unit includes, for example, ROM [Read Only Memory], RAM [Random Access Memory], and EEPROM [Electrically Erasable Programmable Read-Only Memory]. In the display control ECU 10, for example, various functions are realized by executing a program stored in the storage unit by the CPU. The display control ECU 10 may be configured with a plurality of electronic units.

The display control ECU 10 is connected to an external sensor 1, a display 2, and a vehicle control ECU 3. The external sensor 1 is a detection device that detects the surrounding situation of the host vehicle including the preceding vehicle and others. The external sensor 1 includes at least one of a camera and a radar sensor. The camera is an imaging device that captures the external environment of the host vehicle. The camera is provided, for example, on the inside of the windshield of the host vehicle and images the front of the vehicle. The camera transmits the captured images relating to the external situation of the host vehicle to the display control ECU 10. The radar sensor is a detection device that detects objects around the host vehicle using radio waves (for example, millimeter waves) or light. The radar sensor includes, for example, a millimeter wave radar or a light detection and ranging (LiDAR). The radar sensor transmits the detected object information to the display control ECU 10.

The display 2 is a display device provided in the vehicle cabin of the host vehicle. The display 2 may be a center display, a multi-information display (MID), or a head-up display (HUD). The display 2 displays various information according to the control signal from the display control ECU 10.

The vehicle control ECU 3 is an electronic unit that controls the driving support function or the autonomous driving function of the host vehicle. Here, detailed descriptions of the driving support function and the autonomous driving function are omitted. The vehicle control ECU 3 stores the target inter-vehicle distance set by the user of the host vehicle. The user is, for example, a driver. If the host vehicle is a fully autonomous driving vehicle, the user does not need to be a driver and may be an occupant.

Next, the functional configuration of the display control ECU 10 will be described. The display control ECU 10 includes a target inter-vehicle distance acquisition unit 11 and a display control unit 12. The display control ECU 10 may be configured with a plurality of electronic units.

The target inter-vehicle distance acquisition unit 11 acquires the target inter-vehicle distance set for the host vehicle from the vehicle control ECU 3. The target inter-vehicle distance acquisition unit 11 also acquires change information of the target inter-vehicle distance when the target inter-vehicle distance is changed. The change of the target inter-vehicle distance may be performed by the user's operation or may be automatically performed by the vehicle control ECU 3 (for example, the ECU of the autonomous driving system or the driving support system).

The vehicle control ECU 3 may automatically change the target inter-vehicle distance based on at least one of weather changes, road surface condition changes, and changes in the vehicle driving mode by the user (such as switching to sports mode or eco mode). For example, the vehicle control ECU 3 changes the target inter-vehicle distance to be longer when the weather deteriorates, the road surface becomes slippery, or the user switches the vehicle driving mode from standard mode to sports mode.

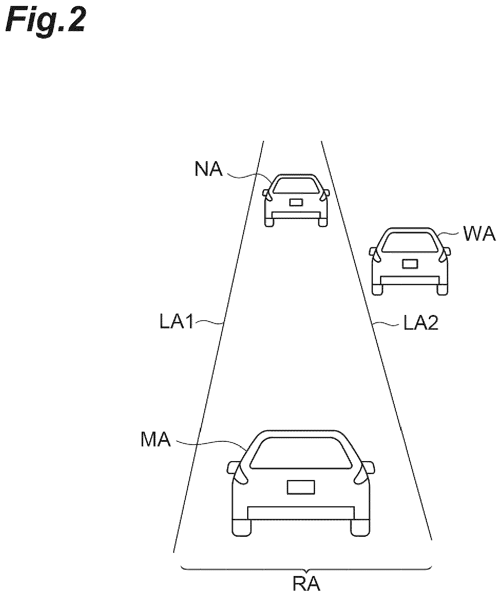

The display control unit 12 displays the host vehicle icon and the preceding vehicle icon on the traveling lane area displayed on the display 2 when the preceding vehicle is detected by the external sensor 1. Here, FIG. 2 is a diagram illustrating an example of a display screen. In FIG. 2, the traveling lane area RA, the left line LA1 and the right line LA2 forming the traveling lane area RA, the host vehicle icon MA, the preceding vehicle icon NA, and the parallel vehicle icon WA are shown. The display on the display 2 is not limited to the bird's-eye view display as shown in FIG. 2, and various display modes that allow the user to recognize the surrounding situation of the host vehicle can be adopted.

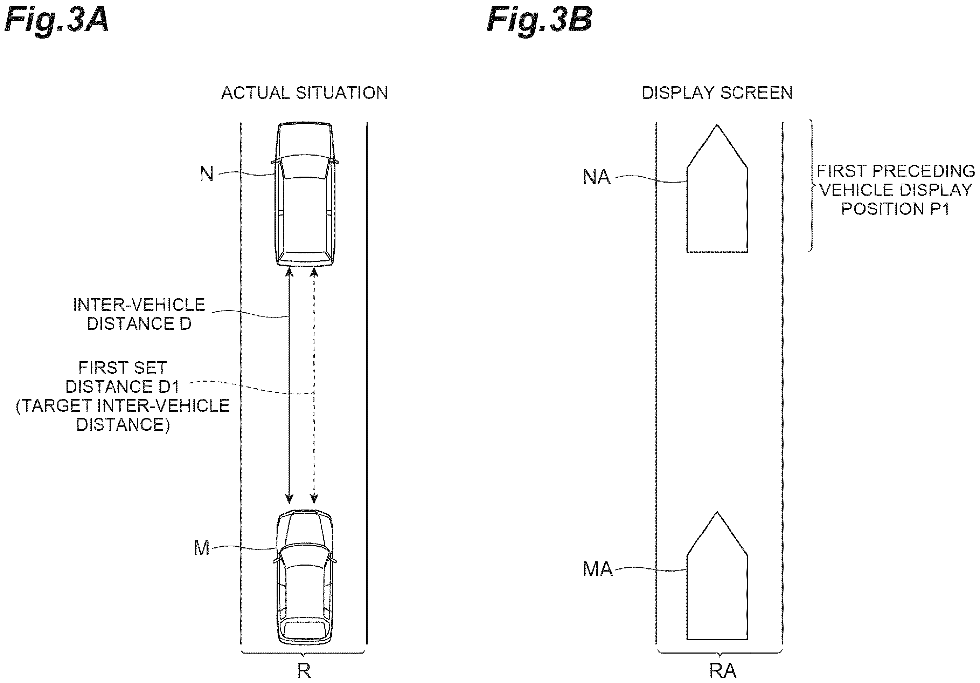

The display control unit 12 changes the display position of the preceding vehicle icon NA on the display according to the target inter-vehicle distance acquired by the target inter-vehicle distance acquisition unit 11. Here, FIG. 3A is a plan view illustrating an example of the actual situation between the host vehicle and the preceding vehicle. In FIG. 3A, the host vehicle M and the preceding vehicle N are shown. The inter-vehicle distance D between the host vehicle M and the preceding vehicle N, and the first set distance D1 set as the target inter-vehicle distance are shown. The first set distance D1 is a predetermined value of distance. The first set distance D1 may be set in consideration of the display area of the display 2.

FIG. 3B is a diagram for explaining a display example corresponding to FIG. 3A. In FIG. 3B, for the sake of explanation, a plan view display is shown. In FIG. 3B, the first preceding vehicle display position P1 where the preceding vehicle icon NA is displayed in the situation of FIG. 3A is shown. The first preceding vehicle display position P1 is the position where the preceding vehicle icon NA is displayed when the set value of the target inter-vehicle distance is set to the first set distance D1. The first preceding vehicle display position P1 is formed in front of the host vehicle icon MA in the traveling lane area RA. The display position of the host vehicle icon MA may be fixed or may be changed according to conditions.

The display control unit 12 displays the preceding vehicle icon NA at the first preceding vehicle display position P1 as shown in FIG. 3B when the situation shown in FIG. 3A is detected based on the detection result of the external sensor 1. The display control unit 12 does not display the preceding vehicle icon NA when the preceding vehicle N is not detected.

The display control unit 12 changes the display position of the preceding vehicle icon NA according to the actual inter-vehicle distance D between the preceding vehicle N and the host vehicle M when the target inter-vehicle distance is switched from the first set distance D1 to the second set distance D2. The second set distance D2 is a distance shorter than the first set distance D1.

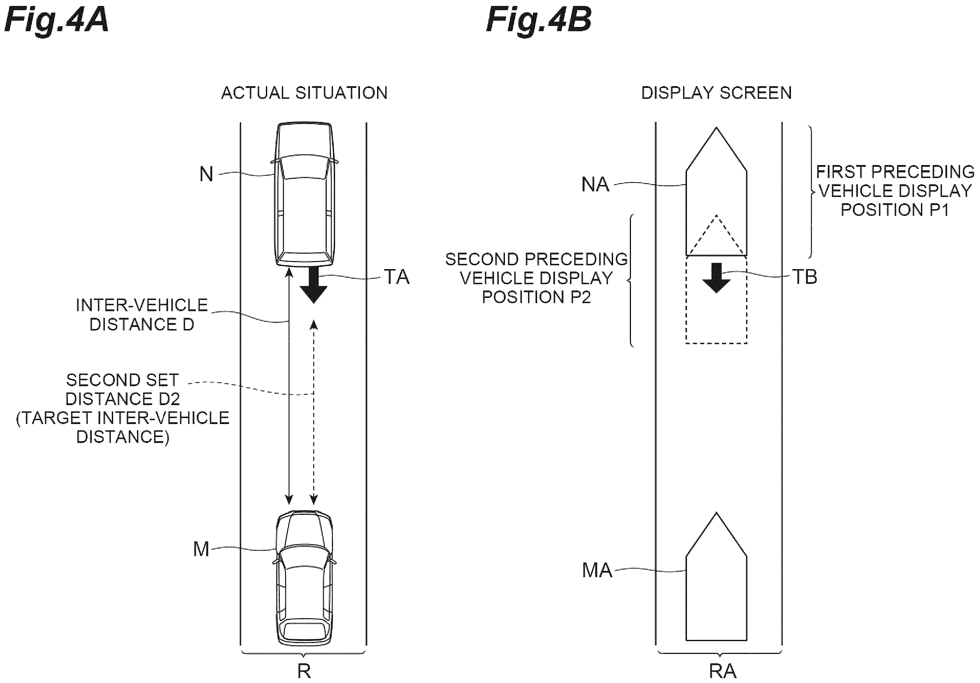

Here, FIG. 4A is a plan view illustrating an example of a situation where the target inter-vehicle distance is switched to the second set distance D2. In FIG. 4A, the second set distance D2 and an arrow TA indicating the situation where the inter-vehicle distance D between the host vehicle M and the preceding vehicle N is gradually decreasing due to the switching of the target inter-vehicle distance are shown.

FIG. 4B is a diagram for explaining an example of the display corresponding to FIG. 4A. In FIG. 4B, the second preceding vehicle display position P2 and an arrow TB. The arrow TB indicates the movement of the display position of the preceding vehicle icon NA corresponding to the reduction of the actual inter-vehicle distance D are shown. The second preceding vehicle display position P2 is the display position of the preceding vehicle icon NA corresponding to the case where the target inter-vehicle distance is set to the second set distance D2. The second preceding vehicle display position P2 is set at a position closer to the host vehicle icon MA than the first preceding vehicle display position P1 in the traveling lane area RA. The second preceding vehicle display position P2 is set at a position between the first preceding vehicle display position P1 and the host vehicle icon MA.

The display control unit 12 changes the display position of the preceding vehicle icon NA from the first preceding vehicle display position P1 to gradually approach the second preceding vehicle display position P2 as the inter-vehicle distance D becomes shorter as shown in FIG. 4A (see FIG. 4B). The display control unit 12 changes the display position of the preceding vehicle icon NA so that the preceding vehicle icon NA approaches the second preceding vehicle display position P2 as the inter-vehicle distance D approaches the second set distance D2 from the first set distance D1. The display control unit 12 moves the display position of the preceding vehicle icon NA so that the preceding vehicle icon NA reaches the second preceding vehicle display position P2 at the timing when the target inter-vehicle distance reaches the second set distance D2.

The reverse case can also be similarly applied. The display control unit 12 may change the display position of the preceding vehicle icon NA from the second preceding vehicle display position P2 to gradually approach the first preceding vehicle display position P1 as the inter-vehicle distance D increases.

The timing of changing the display position of the preceding vehicle icon NA does not need to be strictly accurate. The display control unit 12 does not need to move the preceding vehicle icon NA to the second preceding vehicle display position P2 at the timing when the target inter-vehicle distance reaches the first set distance D1 to the second set distance D2. The timing when the preceding vehicle icon NA reaches the second preceding vehicle display position P2 may be earlier or later than the timing when the target inter-vehicle distance reaches the second set distance D2.

The first set distance D1 and the second set distance D2 are examples, and three or more set distances may be predetermined. The same applies to the first preceding vehicle display position P1 and the second preceding vehicle display position P2.

The display control unit 12 may change the display position of the preceding vehicle icon NA to a third preceding vehicle display position P3 when the inter-vehicle distance D between the preceding vehicle N and the host vehicle M becomes less than a proximity determination threshold T, regardless of the set value of the target inter-vehicle distance.

The proximity determination threshold T is a predetermined threshold value. The proximity determination threshold T is not particularly limited but may be set to 15 meters or 10 meters. The proximity determination threshold T may be changed to a larger value as the vehicle speed increases. The proximity determination threshold T may be set to a value smaller than the target inter-vehicle distance by a certain amount. The third preceding vehicle display position P3 is set at a position closer to the host vehicle icon MA than the second preceding vehicle display position P2 in front of the vehicle icon MA on the traveling lane area RA.

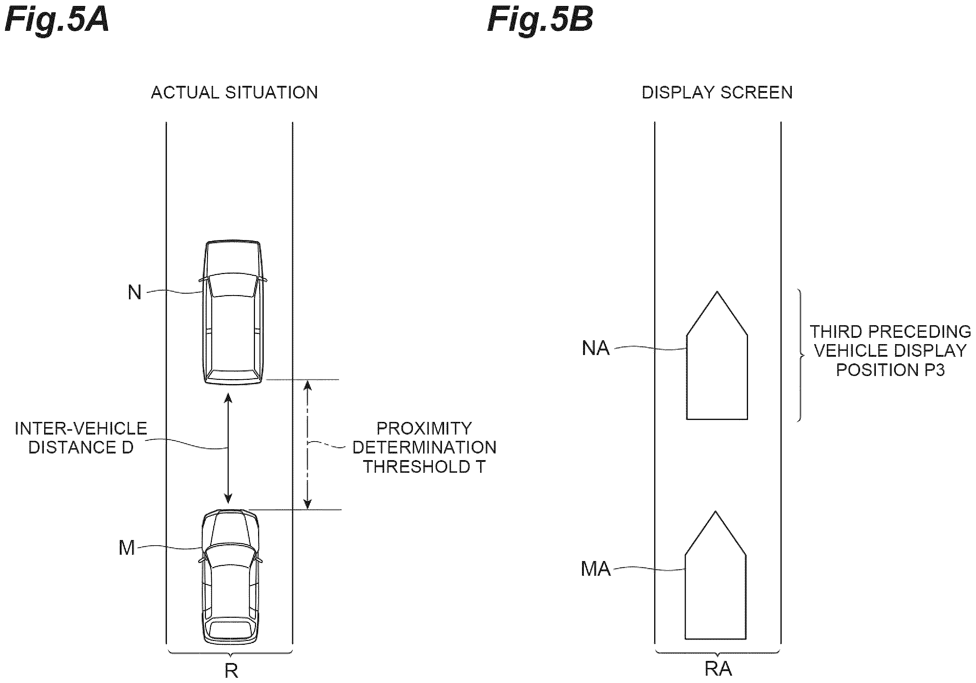

FIG. 5A is a plan view illustrating an example of a situation where the actual inter-vehicle distance D becomes less than the proximity determination threshold T. FIG. 5B is a diagram for explaining a display example corresponding to FIG. 5A. In FIG. 5B, an example of the third preceding vehicle display position P3 is shown. The display control unit 12 changes the display position of the preceding vehicle icon NA to the third preceding vehicle display position P3 when the inter-vehicle distance D becomes less than the proximity determination threshold T as shown in FIG. 5A, regardless of the target inter-vehicle distance.

Furthermore, the display control unit 12 may change the display position of the preceding vehicle icon NA according to the inter-vehicle distance D if the situation where the inter-vehicle distance D continues to be less than the proximity determination threshold T continues. In this case, the display control unit 12 moves the preceding vehicle icon NA closer to the host vehicle icon MA as the inter-vehicle distance D becomes shorter.

### Control Method of In-Vehicle Display System

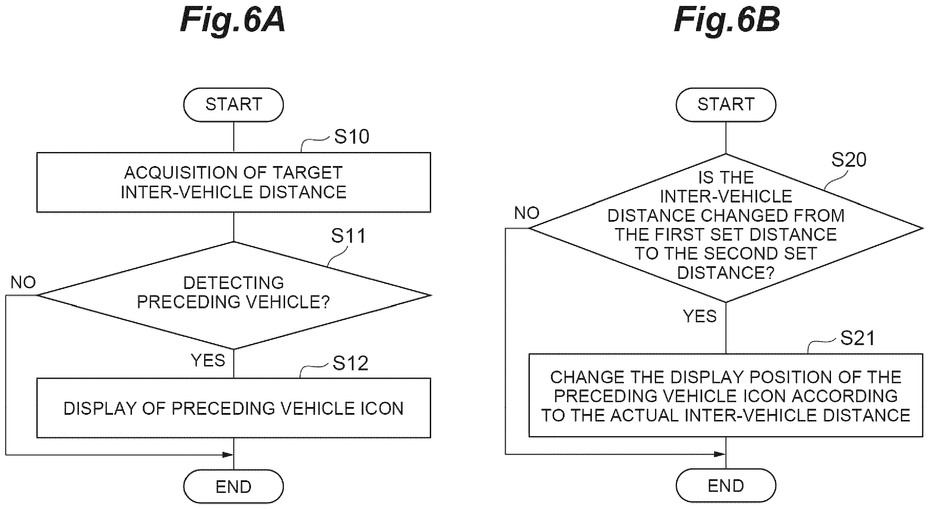

Next, the control method of the in-vehicle display system 100 according to the present embodiment will be described with reference to the drawings. FIG. 6A is a flowchart illustrating an example of a preceding vehicle icon display process. The preceding vehicle icon display process is executed when the user turns on the display of the surrounding situation of the host vehicle.

As shown in FIG. 6A, the display control ECU 10 of the in-vehicle display system 100 acquires the target inter-vehicle distance used for speed control of the host vehicle by the target inter-vehicle distance acquisition unit 11 in step S10. Then, the display control ECU 10 proceeds to step S11.

In step 511, the display control ECU 10 determines whether the preceding vehicle N is detected by the display control unit 12. If it is determined that the preceding vehicle N is detected (S11: YES), the display control ECU 10 proceeds to step S12. If it is determined that the preceding vehicle N is not detected (S11: NO), the current process ends.

In step S12, the display control ECU 10 displays the preceding vehicle icon NA on the display 2 by the display control unit 12. For example, the display control unit 12 displays the preceding vehicle icon NA on the traveling lane area RA as shown in FIG. 2. If the target inter-vehicle distance is the first set distance D1, the display control unit 12 displays the preceding vehicle icon NA at the first preceding vehicle display position P1 (see FIGS. 3A and 3B). Then, the display control ECU 10 ends the current process.

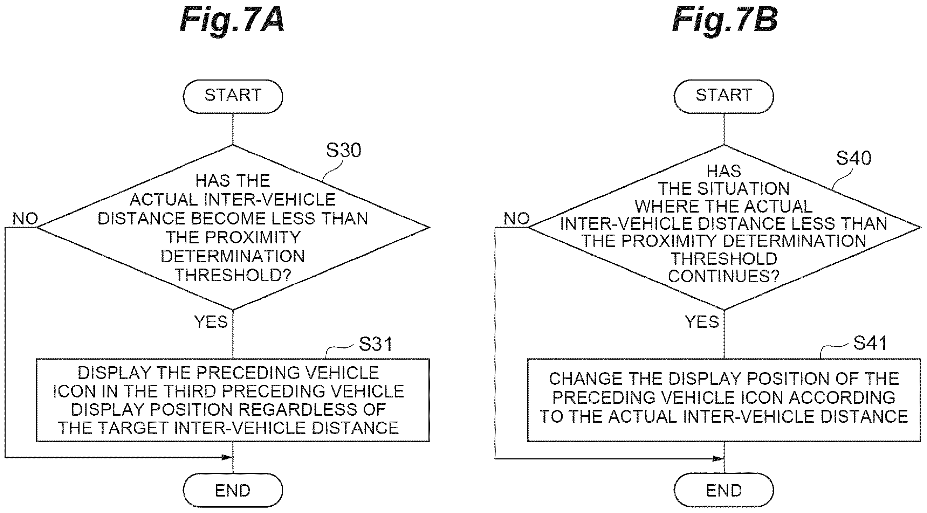

FIG. 6B is a flowchart illustrating an example of a preceding vehicle icon display position change process. The preceding vehicle icon display position change process shown in FIG. 6B is executed when the preceding vehicle icon NA is displayed. However, if the condition described later in FIG. 7A is met, it is excluded.

As shown in FIG. 6B, the display control ECU 10 determines whether the target inter-vehicle distance is changed from the first set distance D1 to the second set distance D2 by the target inter-vehicle distance acquisition unit 11 in step S20. If it is determined that the target inter-vehicle distance is changed from the first set distance D1 to the second set distance D2 (S20: YES), the display control ECU 10 proceeds to step S21. If it is determined that the target inter-vehicle distance is not changed from the first set distance D1 to the second set distance D2 (S20: NO), the current process ends.

In step S21, the display control ECU 10 changes the display position of the preceding vehicle icon NA according to the actual inter-vehicle distance D by the display control unit 12. As shown in FIGS. 4A and 4B, the display control unit 12 changes the display position of the preceding vehicle icon NA from the first preceding vehicle display position P1 to the second preceding vehicle display position P2 as the inter-vehicle distance D approaches the second set distance D2 from the first set distance D1. Then, the display control ECU 10 ends the current process.

FIG. 7A is a flowchart illustrating an example of a proximity determination process. As shown in FIG. 7A, the display control ECU 10 determines whether the actual inter-vehicle distance D becomes less than the proximity determination threshold T by the display control unit 12 in step S30. If it is determined that the inter-vehicle distance D becomes less than the proximity determination threshold T (S30: YES), the display control ECU 10 proceeds to step S31. If it is determined that the inter-vehicle distance D does not become less than the proximity determination threshold T (S30: NO), the current process ends.

In step S31, the display control ECU 10 changes the display position of the preceding vehicle icon NA to the third preceding vehicle display position P3 by the display control unit 12. In this case, the display control unit 12 changes the display position of the preceding vehicle icon NA to the third preceding vehicle display position P3 regardless of the target inter-vehicle distance. That is, the change of the display position of the preceding vehicle icon NA due to the approach of the inter-vehicle distance D between the host vehicle M and the preceding vehicle N is prioritized over the change of the display position of the preceding vehicle icon NA due to the change of the target inter-vehicle distance. Then, the display control ECU 10 ends the current process.

FIG. 7B is a flowchart illustrating another example of a preceding vehicle icon display position change process. The preceding vehicle icon display position change process shown in FIG. 7B is executed when the process in step S31 of FIG. 7A is performed.

As shown in FIG. 7B, the display control ECU 10 determines whether the situation where the actual inter-vehicle distance D is less than the proximity determination threshold T continues by the display control unit 12 in step S40. If it is determined that the situation where the inter-vehicle distance D is less than the proximity determination threshold T continues (S40: YES), the display control ECU 10 proceeds to step S41. If it is determined that the situation where the inter-vehicle distance D is less than the proximity determination threshold T does not continue (S40: NO), the current process ends.

In step S41, the display control ECU 10 changes the display position of the preceding vehicle icon NA according to the actual inter-vehicle distance D by the display control unit 12. The display control unit 12 changes the display position of the preceding vehicle icon NA from the third preceding vehicle display position P3 closer to the host vehicle icon MA as the inter-vehicle distance D becomes shorter.

According to the in-vehicle display system 100 (and its control method) of the present embodiment described above, the preceding vehicle icon NA is displayed at a predetermined position according to the target inter-vehicle distance, and when the target inter-vehicle distance is changed, the preceding vehicle icon NA is moved to match the actual change in the inter-vehicle distance D. This allows the user to appropriately be informed of the situation between the host vehicle M and the preceding vehicle N according to the target inter-vehicle distance. The user can intuitively grasp the change in the target inter-vehicle distance and the change in the inter-vehicle distance D without any discomfort.

Furthermore, according to the in-vehicle display system 100, when the target inter-vehicle distance is changed from the first set distance D1 to the second set distance D2, the preceding vehicle icon NA is moved to the second preceding vehicle display position P2 so that the inter-vehicle distance D between the preceding vehicle N and the host vehicle M reaches the second set distance D2 at the timing. This allows the user to appropriately understand the timing when the adjustment of the inter-vehicle distance D according to the change of the target inter-vehicle distance is completed.

Furthermore, according to the in-vehicle display system 100, when the actual inter-vehicle distance D becomes less than the proximity determination threshold T, the display position of the preceding vehicle icon NA is changed to the third preceding vehicle display position P3 closer to the host vehicle icon MA. This allows the user to appropriately be informed of the information regarding the inter-vehicle distance D when the host vehicle M and the preceding vehicle N approach each other.

Although the embodiments of the present disclosure have been described above, the present disclosure is not limited to the above-described embodiments. The present disclosure can be implemented in various forms with various modifications and improvements based on the knowledge of those skilled in the art.

## Claims

1. An in-vehicle display system (100) mounted on a host vehicle (M) and configured to display a situation around the host vehicle (M) on a display (2) inside a vehicle cabin, comprising:
a target inter-vehicle distance acquisition unit (11) configured to acquire a target inter-vehicle distance (D) for speed control of the host vehicle (M) with respect to a preceding vehicle (N) traveling ahead of the host vehicle (M);
a display control unit (12) configured to display a host vehicle icon (MA) and a preceding vehicle icon (NA) on a traveling lane area displayed on the display when the preceding vehicle is detected; wherein the traveling lane area is set with at least a first preceding vehicle display position (P1) in front of the host vehicle icon (MA) and a second preceding vehicle display position (P2) between the first preceding vehicle display position (P1) and the host vehicle icon (MA);
wherein the display control unit (12) displays the preceding vehicle icon (NA) at the first preceding vehicle display position (P1) on the display when the target inter-vehicle distance is a first set distance (D1);
wherein the display control unit (12) is configured to display the preceding vehicle icon (NA) at the second preceding vehicle display position (P2) on the display when the target inter-vehicle distance is a second set distance (D2) smaller than the first set distance (D1); and
wherein the display control unit (12) is configured to move the preceding vehicle icon (NA) on the display from the first preceding vehicle display position (P1) to the second preceding vehicle display position (P2) as the inter-vehicle distance between the preceding vehicle and the host vehicle (M) approaches the second set distance (D2) from the first set distance (D1) when the target inter-vehicle distance (D) is changed from the first set distance (D1) to the second set distance (D2).

2. The in-vehicle display system according to claim 1, wherein the display control unit (12) is configured to display the preceding vehicle icon (NA) at a position closer to the host vehicle icon (MA) than the second preceding vehicle display position (P2) in the traveling lane area when the inter-vehicle distance between the preceding vehicle and the host vehicle (M) becomes less than a proximity determination threshold regardless of the target inter-vehicle distance (D), and
wherein the display control unit (12) is configured to move the preceding vehicle icon (NA) closer to the host vehicle icon (MA) as the inter-vehicle distance between the preceding vehicle and the host vehicle (M) decreases.

3. The in-vehicle display system according to claim 1 or 2, wherein the display control unit (12) is configured to move the preceding vehicle icon (NA) to the second preceding vehicle display position (P2) simultaneously with the inter-vehicle distance between the preceding vehicle and the host vehicle (M) reaching the second set distance (D2) when the target inter-vehicle distance (D) is changed from the first set distance (D1) to the second set distance (D2).

4. A control method of an in-vehicle display system mounted on a host vehicle (M) and configured to display a situation around the host vehicle (M) on a display inside a vehicle cabin, the control method comprising:
acquiring a target inter-vehicle distance (D) for speed control of the host vehicle (M) with respect to a preceding vehicle traveling ahead of the host vehicle (M);
displaying a host vehicle icon (MA) and a preceding vehicle icon (NA) on a traveling lane area displayed on the display when the preceding vehicle is detected;
wherein the traveling lane area is set with at least a first preceding vehicle display position (P1) in front of the host vehicle icon (MA) and a second preceding vehicle display position (P2) between the first preceding vehicle display position (P1) and the host vehicle icon (MA);
displaying the preceding vehicle icon (NA) at the first preceding vehicle display position (P1) on the display when the target inter-vehicle distance (D) is a first set distance (D1);
displaying the preceding vehicle icon (NA) at the second preceding vehicle display position (P2) on the display when the target inter-vehicle distance (D) is a second set distance (D2) smaller than the first set distance (D1); and
moving the preceding vehicle icon (NA) on the display from the first preceding vehicle display position (P1) to the second preceding vehicle display position (P2) as the inter-vehicle distance between the preceding vehicle and the host vehicle (M) approaches the second set distance (D2) from the first set distance (D1) when the target inter-vehicle distance (D) is changed from the first set distance (D1) to the second set distance (D2).
